# EUROPEAN PATENT SPECIFICATION

(11) **EP 2 641 003 B1**
(45) Date of publication and mention of the grant of the patent: **27.01.2016**
(21) Application number: 11774099.3
(22) Date of filing: 16.09.2011
(51) Int. Cl.: F16J 15/00, F16J 15/32, F16J 15/02, F16J 15/06

(54) **SEAL AND METHOD FOR PRODUCING A SEALING RING**
DICHTUNG UND VERFAHREN ZUR HERSTELLUNG EINES DICHTRINGS
JOINT ET PROCÉDÉ DE PRODUCTION D'UNE BAGUE D'ÉTANCHÉITÉ

(30) Priority: 15.11.2010 DE 102010051403
(43) Date of publication of application: 25.09.2013
(73) Proprietor: Carl Freudenberg KG, 69469 Weinheim (DE)
(72) Inventor: FIETZ, Roland, 35279 Neustadt-Momberg (DE)
(86) International application number: PCT/IB2011/002161
(87) International publication number: WO 2012/066395

(56) References cited:
- EP-A1- 0 014 905
- WO-A2-02/079676
- DE-A1- 2 705 067

## Description

### FIELD

The present disclosure relates to a seal, comprising at least one sealing profile with at least one sealing lip and at least one hook-shaped claw connector, which, when viewed as the cross-section of the sealing profile, is adjacent to the sealing lip, wherein the sealing profile is designed as one piece and of the same material.

### BACKGROUND

This section provides background information related to the present disclosure which is not necessarily prior art.

Such a seal is disclosed in the DE 27 05 067 A1. In the sealing profile a protector is arranged, whereby the protector is build as a stiffening element. This stiffening element reinforces the hook-shaped claw connector.

In the EP 0 014 905 A1 a seal according to the preamble of claim 1 is disclosed, comprising one sealing profile and one wiper, wherein the sealing profile consists of rubber-material and the wiper consists of an elastomeric- or plastomeric-material.

Another seal is disclosed in the WO 2002/079676 A2. A media isolation seal system for sealing between a housing and a shaft to prevent passage of pressurized abrasive media includes a floating seal disposed between the housing and the shaft for contact the pressurized abrasive media and preventing passage other media thereby. A rear seal disposed between the housing and the shaft at a spaced apart distance from the floating seal as provided along with a lubricating fluid disposed between the floating seal and the rear seal for transferring pressure to the rear seal and enabling the floating seal to have a zero differential there across.

Seals are generally known, made of a generic elastomeric/ plastic material and can be used for sealing laterally or rotationally movable machine elements. In this context, the seal can be developed annular and inherently complete, wherein such sealing ring is produced by injection molding or extrusion, for example.

### SUMMARY

This section provides a general summary of the disclosure, and is not a comprehensive disclosure of its full scope or all of its features.

The object of the invention is to develop a seal of the known type such that it can be produced easily and cost-effectively. The seal should moreover be capable of being better adaptable to the respective circumstances of the special application, particularly in that the seal is expandable modularly. Moreover, the material which the sealing profile consists of should have a good wear resistance and excellent abrasion resistance, high strength and high breaking strength. The material should be resistant against mineral oil over a wide temperature range and has excellent resistance against ozone and oxidation. The material should have good damping behavior and a very good low-temperature flexibility and a high resistance against crack formation.

To solve the problem, a seal is provided comprising at least one sealing profile with at least one sealing lip and at least one hook-shaped claw connector, which, when viewed as the cross-section of the sealing profile, is adjacent to the sealing lip, wherein the sealing profile is designed as one piece and of the same material and wherein the material which the sealing profile consists of is a polyurethane and the polyurethane has a shore hardness A of 90 to 95. Such material has the advantage that it can be well processed as a thermoplastic. The manufacturing processes, such as through injection molding or extrusion, can be performed efficiently and cost-effectively. Such material also has good wear resistance and excellent abrasion resistance, high strength and high breaking strength. The material is resistant against mineral oil over a wide temperature range and has excellent resistance against ozone and oxidation. It has good damping behavior and a very good low-temperature flexibility and a high resistance against crack formation; the material has a high tear propagation resistance.

In order to connect two sealing profiles with each other, one claw connector each per sealing profile is adequate. If on the other hand, several sealing profiles are to be connected with each other, then the sealing profiles arranged between the two peripheral sealing profiles, viewed as a cross-section, require one claw connector each on both axial sides of the sealing lip. The possibility therefore exists to assemble the seal using a modular design principle, in that multiple sealing profiles are connected by their respective claw connectors with the sealing profiles that are adjacently arranged in each case.

The first and the second claw connectors are preferably configured congruently to each other. The seal can be expanded very easily in that the number of sealing profiles required for the respective specific application is connected with each other by means of the claw connectors.

The claw connectors can be designed such, for example, in that the sealing profile, viewed as a cross-section, on the one hand has a peripheral groove that opens toward the top and on the other has a peripheral groove that opens facing down. Adjacent sealing profiles can then be hooked into the congruently designed projections of the grooves of the adjacent sealing profile, looking at the cross-section of the sealing profile.

Each claw connector can have at least one detent. The detents engage into indentations which are congruently formed to the detents of the claw connectors of the respective adjacent sealing profiles. Because of the detents which engage positively into the indentations, the reciprocally adjacent sealing profiles are captively connected to each other. As a result, the reciprocally adjacent sealing profiles form a preassembled unit that can be easily handled during the installation of the seal. This limits the risk of errors during the assembly to a minimum.

The claw connectors and the sealing lip can be arranged parallel to each other, in each case. As a result, the seal manufacture is also easier.

The claw connectors and the corresponding sealing lips can be designed as one piece and be of the same material. As a result, the seal can be produced easily and cost-effectively. For special applications, where such one-piece design and material uniformity is not advantageous, the possibility exists of producing the seal from several components, which means that it can be adapted even better to the respective application.

The sealing profile consists of a polyurethane, an elastic flexible material. Such sealing material is well-suited for many specific applications.

At least two sealing profiles, when looking at them as a cross-section, can be arranged adjacently, wherein the first claw connector of the first sealing profile is connected with the second claw connector of the second sealing profile. Using such type of construction, an infinite number of sealing profiles can theoretically be arranged next to each other and be connected with each other.

According to another embodiment, three sealing profiles, when viewed as a cross-section, can be arranged axially next to each other, wherein the first claw connector of the first sealing profile Is connected with the second claw connector of the third sealing profile and the first claw connector of the third sealing profile is connected with the second claw connector of the second sealing profile. The number of the sealing profiles that are connected with each other depends on the specific application and because of the modular design of the seal, can be adapted without problems to the specific application.

The seal can be designed as a sealing ring or as a sealing tape, for example.

For the simple and cost-effective production of a sealing ring from sealing profiles, as described earlier, a method is claimed in which in a first process step at least a continuous, tape-shaped sealing profile is produced and is cut to length in a second process step, wherein the at least one cut to length sealing profile is deformed annularly In a third process step and wherein the two free ends of the annularly deformed sealing profile are connected with each other in a fourth process step. For sealing rings with different diameters, the production of sealing rings thus does not require different tools in each case; sealing rings with different diameters can thus be produced easily, in that sealing profiles are cut to different lengths and are deformed annularly and that the free ends are then connected with each other.

According to an advantageous development, it can be provided that the two free ends are welded together in the fourth process step. Such connection is durable and leakproof, so that the sealing ring produced by such method has constantly good performance characteristics during extended use.

A modularly structured seal with multiple sealing profiles can thus be produced in that initially at least two sealing profiles are produced in the first process step and are cut to length in the second process step, in that each sealing profile is deformed annularly in the third process step and that the free ends of each annularly deformed sealing profile are connected with each other in the fourth process step, and that at least the two sealing rings so manufactured are connected with each other in a fifth process step by means of the respective adjacent claw connectors. In this context, it is an advantage that the two sealing rings are supplied as individual components which can be connected with each other only immediately prior to the installation in the machine element. Particularly with large diameters, there is no risk that the claw connection would open during the transport.

A modularly structured seal with multiple sealing profiles can be produced alternatively in that initially at least two sealing profiles are produced and cut to length and that after the second and prior to the third process step, the at least two cut to length sealing profiles are connected with each other by means of the respective claw connectors that are adjacent to one another. After the two sealing profiles which are adjacent to each other are connected to a preassembled unit by means of their claw connectors, this unit is annularly deformed in the third process step and the free ends can be welded together in the fourth process step, as described previously.

According to another embodiment, in which the seal has three sealing profiles, a sealing ring is produced such that three sealing profiles are produced in the first process step and are cut to length in the second process step, that each sealing profile is annularly deformed in the third process step, that the free ends of each annularly deformed sealing profile are connected with each other in the fourth process step and that the three sealing rings so produced are connected in a fifth process step with each other such that the first claw connector of the first sealing profile is connected with the second claw connector of the third sealing profile, and the first claw connector of the third sealing profile is connected with the second claw connector of the second sealing profile. In this context, it is an advantage that the three sealing rings are supplied as individual components which can be connected with each other only immediately prior to the installation in the machine element. Particularly with large diameters, there is no risk that the claw connection would open during the transport.

According to another alternative embodiment, in which the seal has three sealing profiles, the sealing ring is produced such that three sealing profiles are produced in the first process step and are cut to length in the second process step and that after the second and prior to the third process step, the three cut to length sealing profiles are connected with each other such that the first claw connector of the first sealing profile is connected with the second claw connector of the third sealing profile and the first claw connector of the third sealing profile is connected with the second claw connector of the second sealing profile.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

Two embodiments of the seal as taught by the invention are explained in detail in the following, using Figs. 1 to 8, which show respective schematic representations, as follows:
Fig. 1 is a cross-sectional view of a first peripheral sealing profile with a claw connector;
Fig. 2 is a perspective view of the sealing profile of Fig. 1;
Fig. 3 is a cross-sectional view of a second peripheral sealing profile with a claw connector;
Fig. 4 is a perspective view of the sealing profile from Fig. 3;
Fig. 5 is a cross-sectional view of a sealing profile for the arrangement between the peripheral sealing profiles pursuant to Fig. 1 and 3, with two claw connectors;
Fig. 6 is a perspective view of the sealing profile of Fig. 5;
Fig. 7 is a first embodiment of a seal which comprises the two sealing profiles from Figures 1 and 3;
Fig. 8 is a second embodiment of a seal, in which the sealing profiles from Figures 1, 3, and 5 are combined into one seal.

Corresponding reference numerals indicate corresponding parts throughout the several views of the drawings.

### DETAILED DESCRIPTION

Example embodiments will now be described more fully with reference to the accompanying drawings.

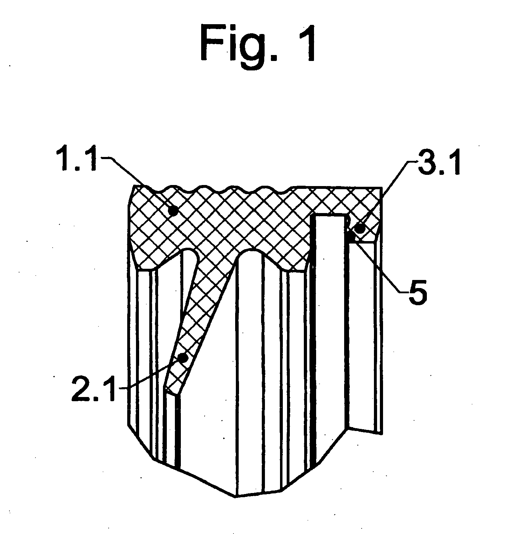

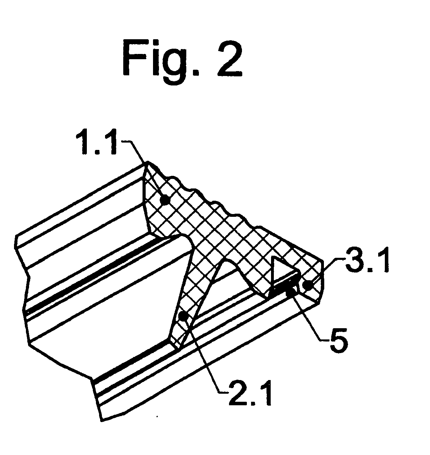

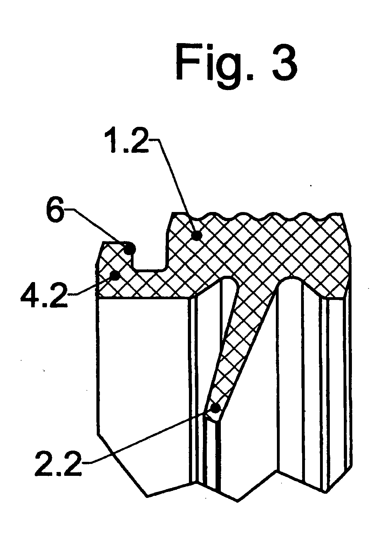

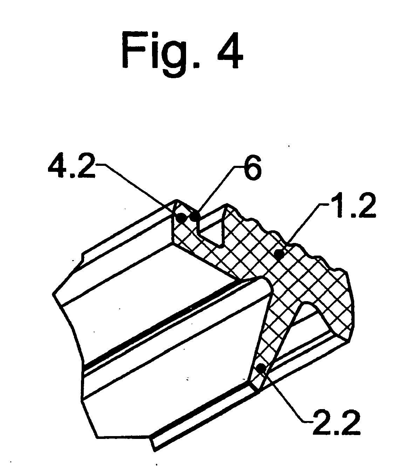

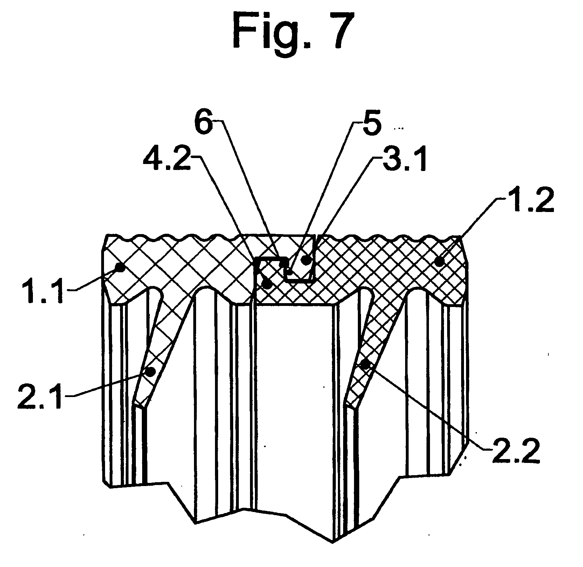

In Figures 1 to 6, sealing profiles 1.1, 1.2, 1.3 are shown respectively, each of which have a sealing lip 2.1, 2.2, 2.3. The two sealing profiles 1.1 from the Figures 1 and 2 as well as 1.2 from Figures 3 and 4 have only one claw connector 3.1, 4.2 each, which are arranged such that the sealing profiles 1.1, 1.2, as illustrated in Fig. 7, can be combined into one seal with two sealing lips 2.1, 2.2.

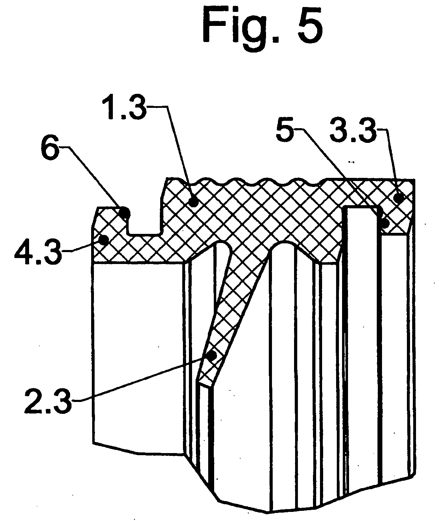

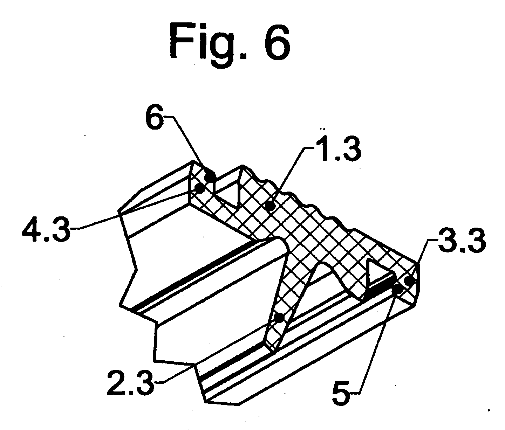

The sealing profile 1.3 from the Figures 5 and 6 on the other hand has two hook-shaped claw connectors 3.3, 4.3, where the retaining claw 3.3 corresponds to the retaining claw 3.1 of the sealing profile 1.1 from Figures 1 and 2, but the claw connector 4.3, on the other hand, corresponds to the sealing profile 1.2 of the claw connector 4.2 of the sealing profile 1.2 from Figures 3 and 4.

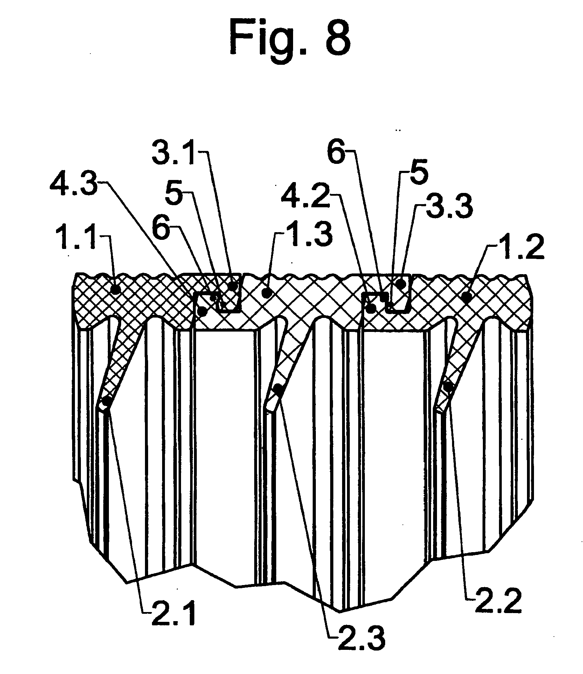

Such embodiment provides the possibility to arrange the sealing profile 1.3 between the sealing profiles 1.1 and 1.2, as illustrated in Fig. 8. If needed, multiple sealing profiles, which correspond to the sealing profile 1.3, can be arranged between the sealing profiles 1.1 and 1.2.

The sealing profiles 1.1, 1.2, 1.3, each have detents 5, 6, on their claw connectors 3.1, 4.2, 3.3, 4.3, so that the sealing profiles 1.1, 1.2, 1.3, that are connected with each other can be connected positively with each other.

The sealing profiles 1.1, 1.2, 1.3, shown here are designed as one piece and are of the same material. The material which the sealing profiles 1.1, 1.2, 1.3 consist of is polyurethane with a shore hardness A of 90 to 95. Such material has the advantage that it can be well processed as a thermoplastic. The manufacturing processes, such as through injection molding or extrusion, can be performed efficiently and cost-effectively. Such material also has good wear resistance and excellent abrasion resistance, high strength and high breaking strength. The material is resistant against mineral oil over a wide temperature range and has excellent resistance against ozone and oxidation. It has good damping behavior and a very good low-temperature flexibility and a high resistance against crack formation; the material has a high tear propagation resistance.

In Fig. 7, the two sealing profiles 1.1, 1.2 from Figures 1 to 4 are completed into one seal. The claw connector 3.1 of the sealing profile 1.1 is positively connected with the claw connector 4.2 of the sealing profile 1.2. As a result, the two sealing profiles 1.1, 1.2 form a unit that can be preassembled.

If the two sealing lips 2.1, 2.2, as shown In Figure 7, are not sufficient for a specific application and if the seal is to have a third sealing lip 2.3, then a seal pursuant to Fig. 8 can be provided.

By simply hooking-up the sealing profile 1.3 between the two sealing profiles 1.1 and 1.2, a seal with three sealing lips 2.1, 2.2, 2,3, is created, wherein the claw connector 3.1 of the first sealing profile 1.1 is positively connected with the claw connector 4.3 of the third sealing profile 1.3, and the claw connector 3.3 of the third sealing profile 1.3 is positively connected with the claw connector 4.2 of the second sealing profile 1.2.

The sealing lips 2.1, 2.2, 2.3, as represented here, can all be arranged on the inside of the sealing ring, i.e. sealing inside. The sealing lips 2.1, 2.2, 2.3, can alternatively also be arranged on the outside of the sealing ring, i.e. sealing on the outside, or the sealing lips 2.1, 2.3, 2.3 can be arranged sealing inside and outside; the sealing lip 2.3 of the sealing profile 1.3, for example, can be arranged in a radially opposed direction relative to the sealing lips 2.1 and 22.

Any number of the sealing profile 1.3 can be arranged between the sealing profiles 1.1 and 1.2, if needed.

Both the seal from Fig. 7 as well as the seal from Fig. 8 can be manufactured such that all sealing profiles 1.1, 1.2, 1.3, are manufactured as continuous tapes in a first process step. In a second process step, all sealing profiles 1.1, 1.2, 1.3 are cut to length equally long. Thereafter, the sealing profiles 1.1, 1.2, 1.3 that are cut to length, are formed into a ring in the third process step, and the respective two free ends of the sealing rings are subsequently welded to each other in the fourth process step. By means of the respectively adjacent claw connectors (3.1, 4.2 (Fig. 7)) or (3.1, 4.3, 3.3, 4.2 (Fig. 8)), the sealing rings formed from the sealing profiles 1.1, 1.2, 1.3, are connected with each other as a ready to use sealing ring in the fifth process step. Alternatively, the sealing profiles can be molded in the ring form.

By using this method, sealing rings were then created as they are shown In a cross-sectional illustration In Figures 7 and 8.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A seal, comprising at least one sealing profile (1.1, 1.2, 1.3) with at least one sealing lip (2.1, 2.2, 2.3) and at least one hook-shaped claw connector (3.1, 4.2, 3.3, 4.3), which, when viewed as the cross-section of the sealing profile (1.1, 1.2, 1.3), is adjacent to the sealing lip (2.1, 2.2, 2.3), wherein the sealing profile (1.1, 1.2, 1.3) is designed as one piece and of the same material, **characterized in that** the material which the sealing profile (1.1, 1.2, 1.3) consists of is a polyurethane and the polyurethane has a shore hardness A of 90 to 95.

2. The seal according to claim 1, wherein when viewed as a cross-section of said at least one sealing profile (1.3), a hook-shaped claw connector (3.3, 4.3) is respectively arranged on both sides of the sealing lip (2.3).

3. The seal according to claim 1, wherein each claw connector (3.1, 4.2, 3.3, 4.3) has at least one detent (5, 6).

4. The seal according to claim 1, wherein the claw connector (3.1, 4.2, 3.3, 4.3) and the corresponding sealing lips (2.1, 2.2, 2.3) are respectively arranged parallel to each other.

5. The seal according to claim 1, wherein the sealing profile (1.1, 1.2, 1.3) comprises an elastic, flexible material.

6. The seal according to claim 1, wherein at least two sealing profiles (1.1, 1.2), viewed as a cross-section, are arranged adjacently and that a first claw connector (3.1) of a first sealing profile (1.1) is connected with a second claw connector (4.2) of a second sealing profile (1.2).

7. The seal according to claim 1, **characterized in that** three sealing profiles (1.1, 1.2, 1.3), viewed as a cross-section, are arranged adjacently and that a first claw connector (3.1) of a first sealing profile (1.1) is connected with a second claw connector (4.3) of a third sealing profile (1.3) and a first claw connector (3.3) of the third sealing profile (1.3) is connected with a second claw connector (4.2) of a second sealing profile (1.2).

8. The seal according to claim 1, wherein said sealing profile is designed as a sealing ring.

9. The seal according to claim 1, wherein said sealing profile is designed as a sealing tape.

10. A method for producing a sealing ring claimed in claims 1 to 9 with at least one sealing lip and at least one hook-shaped claw connector in which in a first process step at least one continuous, tape-like sealing profile (1.1, 1.2, 1.3) is produced and is cut to length in a second process step, wherein the at least one cut to length sealing profile (1.1, 1.2, 1.3) is deformed annularly in a third process step and wherein two free ends of the annularly deformed sealing profile (1.1, 1.2, 1.3) are connected with each other in a fourth process step.

11. The method according to claim 10, wherein the two free ends are welded together in the fourth process step.

12. The method according to claim 10, wherein initially at least two sealing profiles (1.1, 1.2) are produced in the first process step and are cut to length in the second process step, that each sealing profile (1.1, 1.2) is deformed annularly in the third process step and that free ends of each annularly deformed sealing profile (1.1, 1.2) are connected with each other in the fourth process step and that the two sealing rings so manufactured are connected with each other in a fifth process step by means of the respective adjacent claw connectors (3.1, 4.2).

13. The method according to claim 10, wherein three sealing profiles (1.1, 1.2, 1.3) are produced in the first process step and are cut to length in the second process step, that each sealing profile (1.1, 1.2, 1.3) is deformed annularly in the third process step, that free ends of each annularly deformed sealing profile (1.1, 1.2, 1.3) are connected with each other in the fourth process step and that the three sealing rings so manufactured are connected with each other in a fifth process step such that a first claw connector (3.1) of a first sealing profile (1.1) is connected with a second claw connector (4.3) of a third sealing profile (1.3) and a first claw connector (3.3) of the third sealing profile (1.3) is connected with a second claw connector (4.2) of a second sealing profile (1.2).

## Patentansprüche

1. Dichtung, umfassend weinigstens ein Dichtungsprofil (1.1, 1.2, 1.3) mit wenigstens einer Dichtungslippe (2.1, 2.2, 2.3) und wenigstens einem hakenförmigen Klauenverbinder (3.1, 4.2, 3.3, 4.3), der im Querschnitt des Dichtungsprofils (1.1, 1.2, 1.3) gesehen der Dichtungslippe (2.1, 2.2, 2.3) benachbart ist, wobei das Dichtungsprofil (1.1, 1.2, 1.3) als ein Stück und aus dem gleichen Material ausgelegt ist, **dadurch gekennzeichnet, dass** das Material, aus dem das Dichtungsprofil (1.1, 1.2, 1.3) besteht, ein Polyurethan ist und das Polyurethan eine Shore-Härte A von 90 bis 95 aufweist.

2. Dichtung gemäß Anspruch 1, wobei im Querschnitt des wenigstens einen Dichtungsprofils (1.3) gesehen an beiden Seiten der Dichtungslippe (2.3) jeweils ein hakenförmiger Klauenverbinder (3.3, 4.3) angeordnet ist.

3. Dichtung gemäß Anspruch 1, wobei jeder Klauenverbinder (3.1, 4.2, 3.3, 4.3) wenigstens eine Rastung (5, 6) aufweist.

4. Dichtung gemäß Anspruch 1, wobei der Klauenverbinder (3.1, 4.2, 3.3, 4.3) und die entsprechenden Dichtungslippen (2.1, 2.2, 2.3) jeweils parallel zueinander angeordnet sind.

5. Dichtung gemäß Anspruch 1, wobei das Dichtungsprofil (1.1, 1.2, 1.3) ein elastisches, flexibles Material umfasst.

6. Dichtung gemäß Anspruch 1, wobei wenigstens zwei Dichtungsprofile (1.1, 1.2) im Querschnitt gesehen benachbart angeordnet sind und ein erster Klauenverbinder (3.1) eines ersten Dichtungsprofils (1.1) mit einem zweiten Klauenverbinder (4.2) eines zweiten Dichtungsprofils (1.2) verbunden ist.

7. Dichtung gemäß Anspruch 1, **dadurch gekennzeichnet, dass** drei Dichtungsprofile (1.1, 1.2, 1.3) im Querschnitt gesehen benachbart angeordnet sind und ein erster Klauenverbinder (3.1) eines ersten Dichtungsprofils (1.1) mit einem zweiten Klauenverbinder (4.3) eines dritten Dichtungsprofils (1.3) verbunden ist und ein erster Klauenverbinder (3.3) des dritten Dichtungsprofils (1.3) mit einem zweiten Klauenverbinder (4.2) eines zweiten Dichtungsprofils (1.2) verbunden ist.

8. Dichtung gemäß Anspruch 1, wobei das Dichtungsprofil als Dichtungsring ausgelegt ist.

9. Dichtung gemäß Anspruch 1, wobei das Dichtungsprofil als Dichtungsband ausgelegt ist.

10. Verfahren zum Herstellen eines Dichtungsrings gemäß Ansprüchen 1 bis 9 mit wenigstens einer Dichtungslippe und wenigstens einem hakenförmige Klauenverbinder, wobei bei einem ersten Verfahrensschritt wenigstens ein kontinuierliches bandartiges Dichtungsprofil (1.1, 1.2, 1.3) hergestellt wird und bei einem zweiten Verfahrensschritt auf Länge geschnitten, wird, wobei das wenigstens eine auf Länge geschnittene Dichtungsprofil (1.1, 1.2, 1.3) bei einem dritten Verfahrensschritt ringförmig verformt wird und wobei bei einem vierten Verfahrensschritt zwei freie Enden des ringförmig verformten Dichtungsprofils (1.1, 1.2, 1.3) miteinander verbunden werden.

11. Verfahren gemäß Anspruch 10, wobei die beiden freien Enden bei dem vierten Verfahrensschritt zusammengeschweißt werden.

12. Verfahren gemäß Anspruch 10, wobei anfangs bei dem ersten Verfahrensschritt wenigstens zwei Dichtungsprofile (1.1, 1.2) hergestellt werden und bei dem zweiten Verfahrensschritt auf Länge geschnitten werden, bei dem dritten Verfahrensschritt jedes Dichtungsprofil (1.1, 1.2) ringförmig verformt wird und bei dem vierten Verfahrensschritt freie Enden jedes ringförmig verformen Dichtungsprofils (1.1, 1.2) miteinander verbunden werden und bei einem fünften Verfahrensschritt die beiden so hergestellten Dichtungsringe durch die entsprechenden benachbarten Klauenverbinder (3.1, 4.2) miteinander verbunden werden.

13. Verfahren gemäß Anspruch 10, wobei bei dem ersten Verfahrensschritt drei Dichtungsprofile (1.1, 1.2, 1.3) hergestellt werden und bei dem zweiten Verfahrensschritt auf Länge geschnitten werden, bei dem dritten Verfahrensschritt jedes Dichtungsprofil (1.1, 1.2, 1.3) ringförmig verformt wird und bei dem vierten Verfahrensschritt freie Enden jedes ringförmig verformten Dichtungsprofils (1.1, 1.2, 1.3) miteinander verbunden werden und bei einem fünften Verfahrensschritt die drei so hergestellten Dichtungsringe so miteinander verbunden werden, dass ein erster Klauenverbinder (3.1) eines ersten Dichtungsprofils (1.1) mit einem zweiten Klauenverbinder (4.3) eines dritten Dichtungsprofils (1.3) verbunden wird und ein erster Klauenverbinder (3.3) des dritten Dichtungsprofils (1.3) mit einem zweiten Klauenverbinder (4.2) eines zweiten Dichtungsprofils (1.2) verbunden wird.

## Revendications

1. Joint d'étanchéité, comprenant au moins un profilé d'étanchéité (1.1, 1. 2, 1.3) avec au moins une lèvre d'étanchéité (2.1, 2.2, 2.3) et au moins un raccord à griffes en forme de crochet (3.1, 4.2, 3.3, 4.3) qui, vu en coupe transversale du profilé d'étanchéité (1.1, 1.2, 1.3), est adjacent à la lèvre d'étanchéité (2.1, 2.2, 2.3), le profilé d'étanchéité (1.1, 1.2, 1.3) étant conçu d'une seule pièce et dans le même matériau, **caractérisé en ce que** le matériau dont est composé le profilé d'étanchéité (1.1, 1.2, 1.3) est un polyuréthanne et le polyuréthane a une dureté Shore A de 90 à 95.

2. Joint d'étanchéité selon la revendication 1 dans lequel, vu en coupe transversale dudit au moins un profilé d'étanchéité (1.3), un raccord à griffes en forme de crochet (3.3, 4.3) est respectivement disposé sur les deux côtés de la lèvre d'étanchéité (2.3).

3. Joint d'étanchéité selon la revendication 1, dans lequel chaque raccord à griffes (3.1, 4.2, 3.3, 4.3) a au moins un cliquet (5, 6).

4. Joint d'étanchéité selon la revendication 1, dans lequel le raccord à griffes (3.1, 4.2, 3.3, 4.3) et les lèvres d'étanchéité correspondantes (2.1, 2.2, 2.3) sont respectivement disposés parallèlement l'un à l'autre.

5. Joint d'étanchéité selon la revendication 1, dans lequel le profilé d'étanchéité (1.1, 1.2, 1.3) comprend un matériau élastique, souple.

6. Joint d'étanchéité selon la revendication 1, dans lequel au moins deux profilés d'étanchéité (1.1, 1.2), vus en coupe transversale, sont disposés de façon adjacente et un premier raccord à griffes (3.1) d'un premier profilé d'étanchéité (1.1) est relié à un deuxième raccord à griffes (4.2) d'un deuxième profilé d'étanchéité (1.2).

7. Joint d'étanchéité selon la revendication 1, **caractérisé en ce que** trois profilés d'étanchéité (1.1, 1.2, 1.3), vus en coupe transversale, sont disposés de façon adjacente et **en ce qu'**un premier raccord à griffes (3.1) d'un premier profilé d'étanchéité (1.1) est relié à un deuxième raccord à griffes (4.3) d'un troisième profilé d'étanchéité (1.3) et un premier raccord à griffes (3.3) du troisième profilé d'étanchéité (1.3) est relié à un deuxième raccord à griffes (4.2) d'un deuxième profilé d'étanchéité (1.2).

8. Joint d'étanchéité selon la revendication 1, dans lequel ledit profilé d'étanchéité est conçu comme une bague d'étanchéité.

9. Joint d'étanchéité selon la revendication 1, dans lequel ledit profilé d'étanchéité est conçu comme un ruban d'étanchéité.

10. Procédé de production d'une bague d'étanchéité selon les revendications 1 à 9 avec au moins une lèvre d'étanchéité et au moins un raccord à griffes en forme de crochet dans lequel, dans une première étape de procédé, au moins un profilé d'étanchéité continu, en forme de ruban (1.1, 1.2, 1.3) est produit et est coupé à longueur dans une deuxième étape de procédé, dans lequel l'au moins un profilé d'étanchéité coupé à longueur (1.1, 1.2, 1.3) est déformé annulairement dans une troisième étape de procédé et dans lequel les deux extrémités libres du profilé d'étanchéité déformé annulairement (1.1, 1.2, 1.3) sont reliées l'une à l'autre dans une quatrième étape de procédé.

11. Procédé selon la revendication 10, dans lequel les deux extrémités libres sont soudées ensemble dans la quatrième étape de procédé.

12. Procédé selon la revendication 10, dans lequel au départ au moins deux profilés d'étanchéité (1.1, 1.2) sont produits dans la première étape de procédé et sont coupés à longueur dans la deuxième étape de procédé, chaque profilé d'étanchéité (1.1, 1.2) est déformé annulairement dans la troisième étape de procédé et les extrémités libres de chaque profilé d'étanchéité déformé annulairement (1.1, 1.2) sont reliées l'une à l'autre dans la quatrième étape de procédé, et les deux bagues d'étanchéité ainsi fabriquées sont reliées l'une à l'autre dans une cinquième étape de procédé au moyen des raccords à griffes adjacents respectifs (3.1, 4.2).

13. Procédé selon la revendication 10, dans lequel trois profilés d'étanchéité (1.1, 1.2, 1.3) sont produits dans la première étape de procédé et sont coupés à longueur dans la deuxième étape de procédé, chaque profilé d'étanchéité (1.1, 1.2, 1.3) est déformé annulairement dans la troisième étape de procédé, les extrémités libres de chaque profilé d'étanchéité déformé annulairement (1.1, 1.2, 1.3) sont reliées l'une à l'autre dans la quatrième étape de procédé et les trois bagues d'étanchéité ainsi fabriquées sont reliées les unes aux autres dans une cinquième étape de procédé de telle sorte qu'un premier raccord à griffes (3.1) d'un premier profilé d'étanchéité (1.1) est relié à un deuxième raccord à griffes (4.3) d'un troisième profilé d'étanchéité (1.3) et un premier raccord à griffes (3.3) du troisième profilé d'étanchéité (1.3) est relié à un deuxième raccord à griffes (4.2) d'un deuxième profilé d'étanchéité (1.2).
